# EUROPEAN PATENT APPLICATION

(11) **EP 4 556 538 A1**
(43) Date of publication of application: **21.05.2025**
(21) Application number: 23840009.7
(22) Date of filing: 14.07.2023
(51) Int. Cl.: C09D 167/00, C09D 7/61, C09D 7/40, C09D 7/20, C09D 5/14, C08K 3/08, C08K 3/22, C08K 3/32, C08K 3/013, C08K 3/34

(54) **ANTIVIRUS COMPOSITE RESIN COMPOSITION WITH EXCELLENT VIRUS INACTIVATION FUNCTION AND COMPOSITE-RESIN-COATED STEEL SHEET USING SAME**

(30) Priority: 15.07.2022 KR 20220087518
(71) Applicant: POSCO Co., Ltd, Pohang-si, Gyeongsangbuk-do 37859 (KR)
(72) Inventor: JO, Du-Hwan, Pohang-si, Gyeongsangbuk-do 37877 (KR)
(74) Representative: Meissner Bolte Partnerschaft mbB
(86) International application number: PCT/KR2023/010070
(87) International publication number: WO 2024/014918

(57) **Abstract**

The present invention relates to an antivirus composite resin composition comprising: 30-60 weight% of a urethane-modified polyester binder resin; 3-15 weight% of a hardener; 0.1-10 weight% of a pigment; 0.1-10 weight% of an antivirus compound; and the remainder of a solvent, wherein the antivirus compound comprises one or more selected from the group consisting of (A) metal hydroxide ([M1(OH)2]), (B) hydroxyapatite ([Ca10(PO4)6(OH)2]), and (C) metal-doped thermosensitive titanium dioxide photocatalyst ([M2-TiO2]), wherein M1 is Ca or Mg, and M2 is Pt, Cr, V, Mn, Fe, Zn, Cu, Ni, Zr, Mo, Ag, W, or Au.

## Description

### Technical Field

The present disclosure relates to a composite resin composition having antiviral properties capable of inactivating viruses such as coronaviruses, and also to a composite resin coated steel plate sheet having an excellent virus inactivation function using the composition.

### Background Art

Recently, the global pandemic caused by the coronavirus (Covid-19) has not only caused serious socio-economic problems, but has also made the development of vaccines and treatments urgent. Coronaviruses recently caused a global pandemic, but also evolved into the SARS virus in 2013, the MERS virus in 2016, and the Covid-19 virus in 2019. In addition, Covid-19 has mutated from alpha, beta, gamma, and delta to the recently prevalent omicron, which has a fatal impact on human health and well-being. Coronaviruses contain RNA nucleic acids in a spherical phospholipid and protein envelope. Most viruses invade human or animal host cells and multiply by replicating their nucleic acids in large quantities by using the host cell's ribosomes. Viruses are smaller than bacteria or fungi, can spread and replicate quickly, mutate quickly, and have a high transmission rate, making it difficult to develop treatments or vaccines therefor.

Meanwhile, it has been reported that a surface of copper metal, nanometal or metal ions, and quaternary ammonium ions have an inactivation function against viruses. It has been reported that copper metal inactivates viruses with nanometals that are eluted from the surface and penetrate into an outer cell of bacteria or viruses, causing them to lose their replication function and die, and it has been reported that metal ions such as Ag, Ni, and Zn inactivate viruses through a similar mechanism. It has been reported that a polymer containing quaternary ammonium has a hydrophobic functional group bonded to an envelope of bacteria or viruses, destroying their function and thus inactivating the same. However, when such metal ions are used as a coating, it is difficult to sufficiently elute the ions, and the effect tends to decrease or disappear due to oxidation discoloration when used for a long period of time. In addition, the inactivation action by organic compounds is not only incomplete when applied to a surface of a material, but also has the problem of human toxicity, so the use thereof is limited.

In particular, a composite coated steel sheet used for home appliances and building materials is usually manufactured with a coating thickness of several to several tens of µm for long-term use of more than 10 years. Therefore, in the case of the metal, when a liquid coating solution is coated on the steel sheet, there is a problem that it is difficult to exhibit functionality on the surface because there is a high possibility that the solution will be present inside the coating due to density. In addition, there is a problem that a surface color changes due to oxidation, such as copper metal, when used for a long time. In addition, when using quaternary ammonium, some effects are shown, but the immediate effect is insufficient and may be incomplete, so the use thereof is limited.

As part of efforts to address the harmful environment caused by such viruses, there is a need to develop special surface treatment products that can provide an inactivation function against viruses, especially coronaviruses, on the surface of steel sheets, which are essential materials in our lives.

### [Prior art literature]

### [Patent literature]

Republic of Korea Patent Publication No. 10-2020-0047666

### Summary of Invention

### Technical Problem

An aspect of the present disclosure is to provide a coating composition having the function of inactivating microorganisms on a surface of a coating with an inorganic-based compound that not only does not change color even when used for a long period of time, but also has a lower density than metal particles and thus easily floats to the surface of the coating, in order to solve the above-described problem.

Another aspect of the present disclosure is to provide a coated steel sheet using a coating composition having antiviral properties as described above.

### Solution to Problem

According to an embodiment of the present disclosure, provided is an antiviral composite resin composition, the antiviral composite resin composition including: 30 to 60 wt% of a urethane-modified polyester binder resin; 3 to 15 wt% of a curing agent; 0.1 to 10 wt% of a pigment; 0.1 to 10 wt% of an antiviral compound; and a remainder of a solvent, wherein the antiviral component includes one or more selected from the group consisting of (A) metal hydroxide ([M₁OH₂]), (B) hydroxyapatite ([Ca₁₀(PO₄)₆(OH)₂)), and (C) metal-doped thermosensitive titanium dioxide photocatalyst ([M₂-TiO₂]), wherein M₁ is Ca or Mg, and M₂ is Pt, Cr, V, Mn, Fe, Zn, Cu, Ni, Zr, Mo, Ag, W, or Au.

According to another embodiment of the present disclosure, provided is an antiviral composite resin coated steel sheet, the antiviral composite resin coated steel sheet including: a base steel sheet and an antiviral composite resin coating including an antiviral composite resin composition on at least one surface of the base steel sheet.

### Advantageous Effects of Invention

As set forth above, according to an aspect of the present disclosure, an antiviral composite resin composition is provided, which is a composition in which an inorganic oxide and a thermosensitive photocatalyst having a virus-inactivation function are dispersed in a polymer resin composition. The coating formed with the composition of the present disclosure has the function of effectively inactivating viruses adsorbed on the coating surface in the form of droplets, i.e., moisture containing viruses, by hydroxide anions and active oxygen species generated in the coating. In particular, it has the characteristics of easy adsorption of droplets containing viruses and easy inactivation of viruses due to a complementary effect of the thermosensitive photocatalyst, which is activated by infrared rays even in the absence of light, along with the strong cation and anion elution characteristics of inorganic hydroxides. In addition, it has the advantage that the properties of the antiviral material do not change significantly even when the steel sheet for building materials is used for a long period of time.

### Brief description of drawings

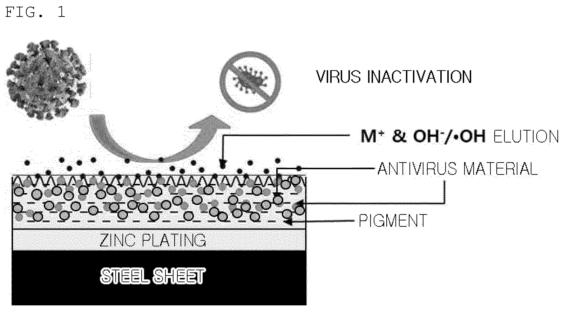

FIG. 1 schematically illustrates a cross-section of an antiviral composite resin coated steel sheet provided by the present disclosure and a virus inactivation principle of the antiviral composite resin coated steel sheet.

### Best Mode for Invention

Hereinafter, preferred embodiments of the present disclosure will be described with reference to the attached drawings. However, the embodiments of the present disclosure may be modified to have various other forms, and the scope of the present disclosure is not limited to the embodiments described below.

According to an embodiment of the present disclosure, a composite resin composition is provided, the composite resin composition in which a predetermined pigment and an antiviral material are included in a transparent resin composition comprising a urethane-modified polyester polymer resin, a curing agent, and a solvent. A coating coated with the resin composition of the present disclosure may form a coating having excellent antiviral properties when cured by causing an antiviral material with a low specific gravity to float to the interface.

An antiviral composite resin composition according to an embodiment of the present disclosure may provide a coating having excellent processability and chemical resistance, and by forming a urethane-modified polyester resin coating in which a pigment and an antiviral compound are mixed, each of the components may form a composite network structure, thereby providing excellent press processability and surface functionality.

To this end, an antiviral composite resin composition according to an embodiment of the present disclosure may include: 30 to 60 wt% of a urethane-modified polyester resin; 3 to 15 wt% of a curing agent; 0.1 to 10 wt% of a pigment; 0.1 to 10 wt% of an antiviral compound; and a remainder of a solvent.

For example, an antiviral composite resin composition according to an embodiment of the present disclosure may include: 40 to 60 wt% of a urethane-modified polyester resin; 5 to 15 wt% of a curing agent; 5 to 8 wt% of a pigment; 1 to 8 wt% of an antiviral compound; and a remainder of a solvent, based on a total weight of the resin composition.

Hereinafter, each component of the resin composition of the present disclosure will be described in more detail.

### <Binder Resin>

An antiviral composite resin composition according to an embodiment of the present disclosure may use a urethane-modified polyester resin as a binder resin of a coating. The urethane-modified polyester resin has excellent processability and chemical resistance of the coating when cured.

The urethane-modified polyester resin may have a weight average molecular weight (MW) of 2,000 to 30,000.

Preferably, the urethane-modified polyester resin may have a weight average molecular weight (MW) of 5,000 to 25,000.

If the molecular weight of the urethane-modified polyester resin is less than 2000, the chemical resistance and processability of the coating are insufficient, and if the molecular weight of the urethane-modified polyester resin exceeds 30000, the storage stability and workability of a solution may deteriorate. The urethane-modified polyester resin may have a glass transition temperature of 0 to 70°C.

In addition, the urethane-modified polyester resin may preferably have a hydroxyl value of 10 to 300, more preferably 20 to 200.

If the hydroxyl value of the urethane-modified polyester resin exceeds 300, the chemical resistance of the coating may be reduced, and if the hydroxyl value of the urethane-modified polyester resin is less than 10, the cross-linking property of the coating may be reduced.

In addition, the urethane-modified polyester resin may have an acid value of 5 to 30 mgKOH/g, preferably an acid value of 10 to 25 mgKOH/g. If the acid value of the urethane-modified polyester resin exceeds 30, the chemical resistance of the coating may be reduced, and if the acid value of the urethane-modified polyester resin is less than 10, the cross-linking property of the coating may be reduced.

A content of the urethane -modified polyester resin may be 30 to 60 wt% relative to the entire antiviral composite resin composition, more preferably 40 to 60 wt%. If the content thereof is out of the range, the drying property may be reduced during curing of the coating, and other physical properties may be reduced.

### <Curing agent>

An antiviral composite resin composition according to an embodiment of the present disclosure may use at least one selected from the group consisting of an aziridine curing agent, a melamine curing agent, and an isocyanate curing agent as a curing agent for curing the binder resin.

The curing agent has excellent reactivity and is not particularly limited, but for example, an aziridine curing agent of the following structural formula (a) may be used.

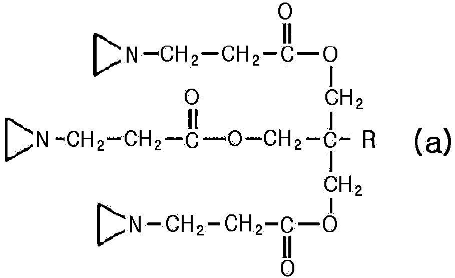

In the structural formula (a), R can be -H, -CH₃, - CH₂CH₃, -CH₂CH₂CH₃, -CH₂OH or -CH₂CH₂OH, and the aziridine curing agent may be used alone or as a mixture of two or more thereof.

In addition, the melamine-based curing agent of the present disclosure may use imino melamine of the following structural formula (b) or methylated melamine of the following structural formula (c).

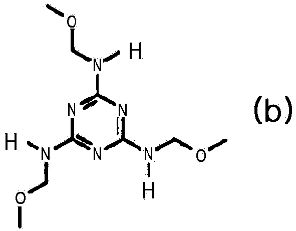

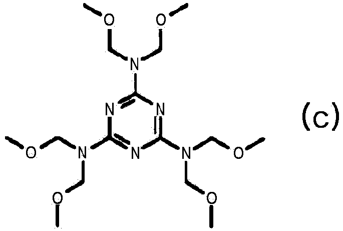

Meanwhile, the melamine curing agent is not limited thereto, but at least one selected from the group consisting of imino melamine of the structural formula (b) and methylated melamine of the structural formula (c) may be used.

As compared to methylated melamine, imino melamine has a faster curing reaction speed, which is advantageous for high-speed curing, and as the content increases, a degree of curing increases, which can increase hardness of a coating. Meanwhile, completely substituted methylated melamine has a slow curing speed but can provide excellent surface quality due to improved smoothness of the coating.

Therefore, the antiviral composite resin composition according to an embodiment of the present disclosure may improve the surface quality of the coating by using methylated melamine as a curing agent, while improving the reaction speed by adding imino melamine having a fast reaction speed. Preferably, the imino melamine of the structural formula (b) and the methylated melamine of the structural formula (c) may be used in combination in a weight ratio of 1:1 to 1:4.

In addition, the isocyanate curing agent of the present disclosure may use an isocyanate curing agent such as a monoisocyanate of the following structural formula (d) or a diisocyanate of the following structural formula (e).

**R** - **N=C=O** (d)

**O=C=N - R' - N=C=O** (e)

As the isocyanate curing agent, a monoisocyanate of structural formula (d) or a diisocyanate of structural formula (e) may be used.

In the structural formula (d), R may be a methyl group, an ethyl group, a propyl group, a phenyl group, a 2-isopropylphenyl group, a cyclohexyl group, or the like.

In the structural formula (e), R' may be 1,3-phenylene, 1,4-phenylene, tolylene-2,4, tolylene-2,6, m-xylylene, dicyclohexylmethane 4,4', methylenediphenyl 4,4', hexamethylene, or the like.

The isocyanate curing agents described above may be used alone, or two or more types thereof may be used in combination.

A content of the curing agent may be 3 to 15 wt% with respect to the entire antiviral composite resin composition, and more preferably 5 to 15 wt%. When the content of the curing agent is less than 3 wt%, processability may be poor due to insufficient curing, and when the content of the curing agent exceeds 15 wt%, the coating may easily crack or break due to over-curing.

### <Pigment>

An antiviral composite resin composition according to an embodiment of the present disclosure may include a pigment having a unique color. Meanwhile, when an antiviral composite resin coated steel sheet according to another embodiment of the present disclosure further includes a primer coating, the primer coating may also include a pigment.

The antiviral composite resin composition according to the present disclosure may have a unique color, especially a combination of black, red, and white pigments. The primer coating may use a yellow or light-yellow pigment, but an embodiment thereof is not limited thereto.

By mixing the black, red, yellow, and white pigments in a predetermined ratio, various colors of pigments may be implemented.

A content of the pigment may be 0.1 to 10 wt% with respect to the entire antiviral composite resin composition, and more preferably 5 to 8 wt%.

If the content of the pigment is less than 0.1 wt%, it may be difficult to obtain a high hiding rate and appealing color of the steel sheet, and if the content of the pigment exceeds 10 wt%, the viscosity of the solution increases, which reduces workability and makes it difficult to obtain an appealing surface appearance.

Meanwhile, the primer coating may include 1 to 8 wt% of the pigment based on a total weight of the primer coating.

Examples of the black pigment include carbon black, carbon nanotubes, graphite, graphene, or the like, and may include at least one selected from the group consisting of iron oxide (Fe₂O₃), titanium dioxide (TiO₂), carbon black, carbon nanotubes, graphite, and graphene. In the present disclosure, the red pigment may include iron oxide (Fe₂O₃). Iron oxide has the advantages of being non-toxic, chemically stable, and being able to produce various colors. An example of a white pigment in the present disclosure is titanium dioxide (TiO₂). An example of a yellow pigment in the present disclosure is strontium chromate.

It is preferable to use the pigment having a low oil absorption amount. The oil absorption amount of the pigment may be less than 60%, and preferably may be in the range of 5 to 50%.

In addition, it is preferable that an average particle size (particle diameter) of the colored pigment is within the range of the dry film thickness ±5 µm. For example, the average particle size (particle diameter) of the colored pigment may be within the range of 5 to 30 µm.

In addition, the antiviral composite resin composition according to an embodiment of the present disclosure may additionally include a rust-preventive pigment for enhancing the rust-preventive properties of the coating in addition to the colored pigment. As the rust-preventive pigment, at least one selected from the group consisting of colloidal silica, silica sol, and alkali metal silicate may be used.

### <Antiviral compound>

An antiviral composite resin composition according to an embodiment of the present disclosure may include an antiviral compound.

The antiviral compound may be at least one selected from the group consisting of (A) a metal hydroxide, which is represented by the formula [M₁(OH)₂], where M₁ is Ca or Mg, (B) a hydroxyapatite, which is represented by the formula [Ca₁₀(PO₄)₆(OH)₂], and (C) a metal-doped thermosensitive titanium dioxide photocatalyst, which is represented by the formula [M₂-TiO₂], where M₂ is Pt, Cr, V, Mn, Fe, Zn, Cu, Ni, Zr, Mo, Ag, W, or Au.

It is known that metal-doped titanium dioxide exhibits visible light or thermosensitive photocatalytic properties by the following principle. In general, a TiO₂ photocatalyst requires 3.1 eV of light energy. However, if a special metal or a metal oxide are doped into the TiO₂, photoactivity may be performed in the low energy range. An antiviral composite resin composition according to an embodiment of the present disclosure may include a thermosensitive TiO₂, which is photoactivated by visible light and infrared light using a TiO₂ photocatalyst doped with a metal oxide.

As the antiviral compound, one selected from the group consisting of (A) metal hydroxide, (B) hydroxyapatite, and (C) metal-doped thermosensitive titanium dioxide photocatalyst may be used alone.

In addition, as illustrated in FIG. 1, the antiviral compound may include a combination of two or more selected from the group consisting of (A) metal hydroxide, (B) hydroxyapatite, and (C) metal-doped thermosensitive titanium dioxide photocatalyst.

For example, the antiviral compound can be used by combining one selected from the group consisting of (A) metal hydroxide and (B) hydroxyapatite; with a (C) metal-doped thermosensitive titanium dioxide photocatalyst.

(C) Since the metal-doped thermosensitive titanium dioxide photocatalyst generates radical species, better antiviral performance may be exhibited when combined with one selected from the group consisting of (A) metal hydroxide and (B) hydroxyapatite.

The most effective antiviral properties may be exhibited when the content of the (C) metal-doped thermosensitive titanium dioxide photocatalyst relative to the (A) metal hydroxide or (B) hydroxyapatite is used in a weight ratio of 3:1 to 1:3.

In addition, the antiviral compound of the present disclosure may include all of (A) metal hydroxide, (B) hydroxyapatite, and (C) metal-doped thermosensitive titanium dioxide photocatalyst. When the weight ratio of the (A) metal hydroxide, (B) hydroxyapatite, and (C) metal-doped thermosensitive titanium dioxide photocatalyst is 1:1:1, the antiviral properties may exhibit excellent properties similar to those of the Example.

A content of the antiviral compound may be 0.1 to 10 wt% with respect to the entire antiviral composite resin composition, and more preferably 1 to 8 wt%. When the content of the antiviral compound is less than 0.1 wt%, the virus inactivation rate may be low, resulting in insufficient effectiveness. When the content of the antiviral compound exceeds 10 wt%, the processability of the coating may deteriorate.

### <Remainder of solvent>

A remainder, other than the components described above, may be a solvent.

In addition, a primer coating composition for forming the primer coating may also include a remainder of a solvent. The solvent included in the primer coating composition may be the same as or different from the solvent used in the antiviral composite resin composition.

The solvent may be a solvent comprised of at least one selected from the group consisting of, for example, toluene, xylene, isopropanol, solvent naphtha, cellosolve, cellosolve acetate, and butyl cellosolve. The solvent may be used alone or as a mixture of two or more thereof.

The viscosity of the composition may vary depending on the content of the solvent, but the content of the solvent added to each composition may be appropriately adjusted as needed and is not specifically limited herein. For example, in the case of an antiviral composite resin composition, the amount may be adjusted to a viscosity that takes 20 to 200 seconds to be discharged from a Dean cup (DIN, 53211), for example, by considering the coating amount and adhesiveness.

An antiviral composite resin composition according to an embodiment of the present disclosure may further include at least one additive, such as a wax, a curing catalyst, a pigment agglomeration inhibitor, an anti-foaming agent, a leveling agent, or the like, in addition to the above-described components, as needed, to further improve the properties of the coating. The optional additives, if commonly used, may be appropriately used in the present disclosure, and may be applied according to a normal mixing ratio.

A method for producing an antiviral composite resin composition according to an embodiment of the present disclosure is not particularly limited, but for example, a resin composition may be prepared by dispersing a curing agent in a urethane-modified ester resin, which is a binder resin, and then additionally adding a pigment for color and rust prevention and an antiviral compound, dispersing the mixture, and then putting the mixture in a solvent.

### <Antiviral composite resin coated steel sheet>

According to another embodiment of the present disclosure, an antiviral composite resin coated steel sheet including a coating formed by the antiviral composite resin composition of the present disclosure is provided. In describing the antiviral composite resin coated steel sheet, the description of the antiviral composite resin composition may be applied equally.

The antiviral composite resin coated steel sheet may be provided by applying the antiviral composite resin composition described above to at least one surface (first surface) and the other surface (second surface) of a base steel sheet.

As the base steel sheet, a galvanized steel sheet may be used. As examples of the galvanized steel sheet, and while an embodiment thereof is not limited, a hot-dip galvanized steel sheet (GI), a hot-dip galvannealed steel sheet (GA), an electrogalvanized steel sheet (EG), an aluminum-galvanized steel sheet, a zinc-aluminum-magnesium ternary alloy-galvanized steel sheet, or the like, may be used.

An antiviral composite resin coating on the base steel sheet is formed by the antiviral composite resin composition provided above, and the antiviral composite resin composition may include a urethane-modified polyester resin, a melamine curing agent, a pigment, and an antiviral compound as described above.

The composition of the antiviral composite resin coating may be prepared using a composition including 30 to 60 wt% of a urethane-modified polyester resin, 3 to 15 wt% of a curing agent, 0.1 to 10 wt% of a pigment; 0.1 to 10 wt% of an antiviral compound; and a remainder of a solvent, as described above.

For example, the antiviral composite resin composition provided for manufacturing an antiviral composite resin coated steel sheet of the present disclosure may include 40 to 60 wt% of a urethane-modified polyester resin; 5 to 15 wt% of a curing agent; 5 to 8 wt% of a pigment; 1 to 8 wt% of an antiviral compound; and a remainder of a solvent, based on a total weight of the resin composition.

The antiviral composite resin composition may be applied to a base steel sheet, and then dried to form an antiviral composite resin coating. In this case, an application method and drying method are not particularly limited, and any method generally known in this technical field may be used. Drying is not limited thereto, but may be performed by, for example, hot air heating, infrared heating, induction heating, natural drying, or the like.

More specifically, it is preferable to dry an antiviral composite resin composition according to an embodiment of the present disclosure at a peak metal temperature (PMT) of 180 to 260°C. Although not limited thereto, specifically, for example, in the case of a hot air heating method, the composition may be dried by hot air treatment at an ambient temperature of 200 to 340°C for 10 to 50 seconds.

The antiviral composite resin film can be formed to have a dry film thickness of 3 to 40 µm, preferably 5 to 30 µm.

If the dry film thickness of the antiviral composite resin film is less than 5 µm, the color, hiding power, processability, and solvent resistance of the composite resin coating may deteriorate. If the dry film thickness of the antiviral composite resin film exceeds 30 µm, it is not preferable since manufacturing costs may increase and productivity may decrease.

### <Primer coating>

An antiviral composite resin coated steel sheet according to another embodiment of the present disclosure may be an antiviral composite resin coated steel sheet in which a primer coating is formed on at least one surface or both surfaces, and an antiviral composite resin coating provided as an embodiment of the present disclosure is formed on one surface of the primer coating.

In the case of a steel sheet including the antiviral composite resin coating (a top coating), a primer coating may be positioned as a bottom coating between the base steel sheet and the antiviral composite resin coating (the top coating) .

In another embodiment of the present disclosure, in the antiviral composite resin coated steel sheet, the primer coating additionally formed on a first surface and/or a second surface of the base steel sheet is not particularly limited, and may be any coating known to be applicable between the base steel sheet and the antiviral composite resin coating (top coating) in this technical field may be used to increase the adhesion between the base steel sheet and the antiviral composite resin coating, which imparts properties required for the steel sheet, such as paintability, corrosion resistance, or the like, to the steel sheet.

For example, a primer coating composition for forming the primer coating may be a composition comprising 40 to 60 wt% of a polyethylene polymer resin, 5 to 15 wt% of a melamine curing agent, 1 to 8 wt% of a colloidal silica, 1 to 8 wt% of a pigment, and a remainder of a solvent. The remainder of the solvent may be different from or the same as the solvent used as the remainder of the solvent in the antiviral composite resin composition.

Meanwhile, the primer coating may be applied so that a dry film thickness thereof is 2 to 7 µm, preferably 3 to 5 µm. If the primer coating thickness exceeds 7 µm, it is not preferable since manufacturing costs may increase and productivity may decrease, and if the primer coating thickness is 2 µm or less, it may be difficult to secure quality characteristics.

The primer coating is a coating for hiding power, rust prevention and color of a material, and is advantageous in terms of improving the color and hiding power, processability and corrosion resistance of the antiviral composite resin coating.

In another embodiment of the present disclosure, when an antiviral composite resin coating is formed on only one surface of a base steel sheet, it is preferable to form a resin coating on a surface of the base steel sheet on which a composite resin coating is not formed, taking into consideration the workability and corrosion resistance of the steel sheet.

### Mode for Invention

### Example

Hereinafter, the present disclosure will be described in more detail through specific examples. The following examples are merely examples to aid understanding of the present disclosure, and the scope of the present disclosure is not limited thereto.

### Examples 1 to 27 and Comparative Examples 1 to 9

A urethane-modified polyester resin, a curing agent, a pigment, an antiviral compound, and a remainder of a solvent were mixed in the contents in Examples 1 to 27 and Comparative Examples 1 to 9 of [Table 1] below, and then dispersed using a high-speed bead mill disperser to prepare an antiviral composite resin composition.

As the urethane-modified polyester resin, a resin having a weight average molecular weight of 16,000 to 20,000 (manufactured by KCC Co., Ltd., glass transition temperature (Tg) of 10 to 30°C) was used.

As the curing agents, trimethylolpropane tris(-N-aziridinyl) propionate was used as the aziridine curing agent, hexamethoxymethylmelamine was used as the melamine curing agent, and toluene diisocyanate was used as the isocyanate curing agent.

As the pigments, carbon black (Printex^{™} series of Evonik Co., Ltd.) was used as a black pigment, ferric oxide was used as a red pigment, and titanium dioxide was used as a white pigment.

The antiviral compound was used by combining (A) calcium hydroxide (Ca(OH)₂) as the metal hydroxide or (B) hydroxyapatite (Osgen Co., Ltd.) with (C) a metal-doped thermosensitive titanium dioxide photocatalyst in a ratio of 3:1 to 1:3. In addition, in Examples 25 to 27 including (A): (B): (C), each component was mixed and used in a weight ratio of 1:1:1.

The remainder of the solvent used was cellosolve acetate.

In this case, (C) the metal-doped thermosensitive titanium dioxide photocatalyst was prepared using a titanium compound [Ti(i-OC₃H₇)₄], isopropyl alcohol, nitric acid, manganese compound [Mn(NO₃)₂)], platinum compound [Pt(NH₃)₂], and methyltertiarymethylsilane.

In more detail, 5 L of distilled water was added to a reactor, 100 ml of nitric acid and 20 g of Mn(NO₃)₂ were dissolved, the temperature was heated to 80°C, 12.5 g of a platinum compound [Pt(NH₃)₂] was added, and the mixture was stirred. In another reactor, 1,500 g of titanium compound [Ti(i-OC₃H₇)₄] and 150 ml of isopropyl alcohol were mixed and then added to the solution. The mixed solution was cooled to room temperature, 10 g of methyl tertiarymethylsilane was added, the resulting precipitate was filtered, and then dried at 300°C to produce the (C) metal-doped thermosensitive titanium dioxide photocatalyst.

**[Table 1]**

| **Classifica tion (Unit: Weight%)** | | **Urethane-modified polyester** | **Curing agent** | | | **Pigment** | | | **Antiviral compound** | | |
|---|---|---|---|---|---|---|---|---|---|---|---|
| | | | **Aziridi Melam ne** | **ine** | **Isocyanate** | **Bla ck** | **Red** | **Whi te** | **A** | **B** | **C** |
| | **1** | 60 | 10 | 0 | 0 | 3 | 2 | 2 | 2 | 0 | 6 |
| | **2** | 60 | 10 | 0 | 0 | 3 | 2 | 2 | 0 | 2 | 6 |
| | **3** | 60 | 0 | 10 | 0 | 2 | 3 | 2 | 2 | 0 | 6 |
| | **4** | 60 | 0 | 10 | 0 | 2 | 3 | 2 | 0 | 2 | 6 |
| | **5** | 60 | 0 | 0 | 15 | 2 | 2 | 3 | 2 | 0 | 6 |
| | **6** | 60 | 0 | 0 | 15 | 2 | 2 | 3 | 0 | 2 | 6 |
| | **7** | 60 | 10 | 0 | 0 | 7 | 0 | 0 | 2 | 0 | 6 |
| | **8** | 60 | 10 | 0 | 0 | 7 | 0 | 0 | 0 | 2 | 6 |
| | **9** | 60 | 0 | 10 | 0 | 0 | 7 | 0 | 2 | 0 | 6 |
| Example | **10** | 60 | 0 | 10 | 0 | 0 | 7 | 0 | 0 | 2 | 6 |
| | **11** | 60 | 0 | 0 | 15 | 0 | 0 | 7 | 2 | 0 | 6 |
| | **12** | 60 | 0 | 0 | 15 | 0 | 0 | 7 | 0 | 2 | 6 |
| | **13** | 60 | 10 | 0 | 0 | 3 | 2 | 2 | 6 | 0 | 2 |
| | **14** | 60 | 10 | 0 | 0 | 3 | 2 | 2 | 0 | 6 | 2 |
| | **15** | 60 | 0 | 10 | 0 | 2 | 3 | 2 | 6 | 0 | 2 |
| | **16** | 60 | 0 | 10 | 0 | 2 | 3 | 2 | 0 | 6 | 2 |
| | **17** | 60 | 0 | 0 | 15 | 2 | 2 | 3 | 6 | 0 | 2 |
| | **18** | 60 | 0 | 0 | 15 | 2 | 2 | 3 | 0 | 6 | 2 |
| | **19** | 60 | 10 | 0 | 0 | 7 | 0 | 0 | 6 | 0 | 2 |
| | **20** | 60 | 10 | 0 | 0 | 7 | 0 | 0 | 0 | 6 | 2 |
| | **21** | 60 | 0 | 10 | 0 | 0 | 7 | 0 | 6 | 0 | 2 |
| | **22** | 60 | 0 | 10 | 0 | 0 | 7 | 0 | 0 | 6 | 2 |
| | **23** | 60 | 0 | 0 | 15 | 0 | 0 | 7 | 6 | 0 | 2 |
| | **24** | 60 | 0 | 0 | 15 | 0 | 0 | 7 | 0 | 6 | 2 |
| | **25** | 60 | 10 | 0 | 0 | 7 | 0 | 0 | 2 | 2 | 2 |
| | **26** | 60 | 0 | 10 | 0 | 0 | 7 | 0 | 2 | 2 | 2 |
| | **27** | 60 | 0 | 0 | 15 | 0 | 0 | 7 | 2 | 2 | 2 |
| | **1** | 60 | 10 | 0 | 0 | 3 | 2 | 2 | 0 | 0 | 0 |
| | **2** | 60 | 0 | 10 | 0 | 0 | 7 | 0 | 0 | 0 | 0 |
| | **3** | 60 | 0 | 0 | 15 | 2 | 3 | 2 | 0 | 0 | 0 |
| | **4** | 60 | 0 | 10 | 0 | 2 | 3 | 2 | 2 | 0 | 0 |
| **Compara tive Example** | **5** | 60 | 0 | 10 | 0 | 2 | 3 | 2 | 0 | 2 | 0 |
| | **6** | 60 | 0 | 10 | 0 | 2 | 3 | 2 | 6 | 0 | 0 |
| | **7** | 60 | 0 | 10 | 0 | 2 | 3 | 2 | 0 | 6 | 0 |
| | **8** | 60 | 0 | 10 | 0 | 2 | 3 | 2 | 0 | 0 | 2 |
| | **9** | 60 | 0 | 10 | 0 | 2 | 3 | 2 | 0 | 0 | 6 |

The prepared antiviral composite resin composition described above was roll-coated on a Zn-Al-Mg ternary alloy-plated steel sheet having a single-sided plating weight of 60 g/m² as shown in [Table 2] or on the alloy-plated steel sheet having a primer coating layer, so that a dry coating thickness of the antiviral composite resin composition of the Example was 15 to 20 µm, and then cured and dried at a peak metal temperature (PMT) of 232°C, and then cooled to prepare an antiviral composite resin-coated steel sheet having a composite resin coating layer as an Example and a Comparative Example.

The primer coating layer was formed using a composition comprising 50 wt% of a polyethylene polymer resin, 10 wt% of a melamine curing agent, 5 wt% of colloidal silica, 5 wt% of a light-yellow pigment, and a remainder of a solvent, so that a dry coating thickness of the primer coating layer after drying was 5 µm.

The surface properties of a composite resin-coated steel sheet having a composite resin coating layer obtained by the above-described preparation process were evaluated, and the results were shown in [Table 2] and [Table 3].

**[Table 2]**

| **Classifica tion** | **Composite resin top coating** | | **Primer (µm)** | **Externa l design** | **glossi ness** | **Pencil hardness** | **Corrosi on resista nce** |
|---|---|---|---|---|---|---|---|
| | **Compositio n** | **Thickness (µm)** | | | | | |
| **Test Example 1** | Example 1 | 15 | 0 | ○ | 20 | 2H | ⊚ |
| **Test Example 2** | Example 2 | 15 | 5 | ⊚ | 25 | 2H | ⊚ |
| **Test Example 3** | Example 3 | 15 | 0 | ○ | 20 | 2H | ⊚ |
| **Test Example 4** | Example 4 | 15 | 0 | ○ | 20 | 2H | ⊚ |
| **Test Example 5** | Example 5 | 15 | 5 | ○ | 20 | 2H | ⊚ |
| **Test Example 6** | Example 6 | 15 | 5 | ○ | 20 | 2H | ⊚ |
| **Test Example 7** | Example 7 | 15 | 5 | ○ | 20 | 2H | ⊚ |
| **Test Example 8** | Example 8 | 15 | 5 | ○ | 20 | 2H | ⊚ |
| **Test Example 9** | Example 9 | 15 | 5 | ○ | 20 | 2H | ⊚ |
| **Test Example 10** | Example 10 | 15 | 5 | ○ | 20 | 2H | ⊚ |
| **Test Example 11** | Example 11 | 15 | 5 | ○ | 20 | 2H | ⊚ |
| **Test Example 12** | Example 12 | 15 | 5 | ○ | 20 | 2H | ⊚ |
| **Test Example 13** | Example 13 | 15 | 0 | ○ | 20 | 2H | ⊚ |
| **Test Example 14** | Example 14 | 15 | 5 | ⊚ | 25 | 2H | ⊚ |
| **Test Example 15** | Example 15 | 15 | 5 | ○ | 20 | 2H | ⊚ |
| **Test Example 16** | Example 16 | 15 | 5 | ○ | 20 | 2H | ⊚ |
| **Test Example 17** | Example 17 | 15 | 5 | ○ | 20 | 2H | ⊚ |
| **Test Example 18** | Example 18 | 15 | 5 | ○ | 20 | 2H | ⊚ |
| **Test Example 19** | Example 19 | 15 | 5 | ○ | 20 | 2H | ⊚ |
| **Test Example 20** | Example 20 | 15 | 5 | ○ | 20 | 2H | ⊚ |
| **Test Example 21** | Example 21 | 15 | 5 | ○ | 20 | 2H | ⊚ |
| **Test Example 22** | Example 22 | 15 | 5 | ○ | 20 | 2H | ⊚ |
| **Test Example 23** | Example 23 | 15 | 5 | ○ | 20 | 2H | ⊚ |
| **Test Example 24** | Example 24 | 15 | 5 | ○ | 20 | 2H | ⊚ |
| **Test Example 25** | Example 25 | 15 | 5 | ○ | 20 | 2H | ⊚ |
| **Test Example 26** | Example 26 | 15 | 5 | ○ | 20 | 2H | ⊚ |
| **Test Example 27** | Example 27 | 15 | 5 | ○ | 20 | 2H | ⊚ |
| **Test Example 28** | Comparativ e Example 1 | 15 | 5 | ○ | 20 | 2H | ⊚ |
| **Test Example 29** | Comparativ e Example 2 | 15 | 5 | ○ | 20 | 2H | ⊚ |
| **Test Example 30** | Comparativ e Example 3 | 15 | 5 | ○ | 20 | 2H | ⊚ |
| **Test Example 31** | Comparativ e Example 4 | 15 | 5 | ○ | 20 | 2H | ⊚ |
| **Test Example 32** | Comparativ e Example 5 | 15 | 5 | ○ | 20 | 2H | ⊚ |
| **Test Example 33** | Comparativ e Example 6 | 15 | 5 | ○ | 20 | 2H | Δ |
| **Test Example 34** | Comparativ e Example 7 | 15 | 5 | ○ | 20 | 2H | Δ |
| **Test Example 35** | Comparativ e Example 8 | 15 | 5 | ○ | 20 | 2H | ⊚ |
| **Test Example 36** | Comparativ e Example 9 | 15 | 5 | ○ | 20 | 2H | ⊚ |

**[Table 3]**

| **classifica tion** | **Composite resin top coating** | | **Primer (µm)** | **Process ability** | **Chemical resistan ce** | **Virus inactivation rate** | |
|---|---|---|---|---|---|---|---|
| | **compositio n** | **Thickness (µm)** | | | | **Short-term** | **Long-term** |
| **Test Example 1** | Example 1 | 15 | 0 | ⊚ | ⊚ | ⊚ | ⊚ |
| **Test Example 2** | Example 2 | 15 | 5 | ⊚ | ⊚ | ⊚ | ⊚ |
| **Test Example 3** | Example 3 | 15 | 0 | ⊚ | ⊚ | ⊚ | ⊚ |
| **Test Example 4** | Example 4 | 15 | 0 | ⊚ | ⊚ | ⊚ | ⊚ |
| **Test Example 5** | Example 5 | 15 | 5 | ⊚ | ⊚ | ⊚ | ⊚ |
| **Test Example 6** | Example 6 | 15 | 5 | ⊚ | ⊚ | ⊚ | ⊚ |
| **Test Example 7** | Example 7 | 15 | 5 | ⊚ | ⊚ | ⊚ | ⊚ |
| **Test Example 8** | Example 8 | 15 | 5 | ⊚ | ⊚ | ⊚ | ⊚ |
| **Test Example 9** | Example 9 | 15 | 5 | ⊚ | ⊚ | ⊚ | ⊚ |
| **Test Example 10** | Example 10 | 15 | 5 | ⊚ | ⊚ | ⊚ | ⊚ |
| **Test Example 11** | Example 11 | 15 | 5 | ⊚ | ⊚ | ⊚ | ⊚ |
| **Test Example 12** | Example 12 | 15 | 5 | ⊚ | ⊚ | ⊚ | ⊚ |
| **Test Example 13** | Example 13 | 15 | 0 | ⊚ | ⊚ | ⊚ | ⊚ |
| **Test Example 14** | Example 14 | 15 | 5 | ⊚ | ⊚ | ⊚ | ⊚ |
| **Test Example 15** | Example 15 | 15 | 5 | ⊚ | ⊚ | ⊚ | ⊚ |
| **Test Example 16** | Example 16 | 15 | 5 | ⊚ | ⊚ | ⊚ | ⊚ |
| **Test Example 17** | Example 17 | 15 | 5 | ⊚ | ⊚ | ⊚ | ⊚ |
| **Test Example 18** | Example 18 | 15 | 5 | ⊚ | ⊚ | ⊚ | ⊚ |
| **Test Example 19** | Example 19 | 15 | 5 | ⊚ | ⊚ | ⊚ | ⊚ |
| **Test Example 20** | Example 20 | 15 | 5 | ⊚ | ⊚ | ⊚ | ⊚ |
| **Test Example 21** | Example 21 | 15 | 5 | ⊚ | ⊚ | ⊚ | ⊚ |
| **Test Example 22** | Example 22 | 15 | 5 | ⊚ | ⊚ | ⊚ | ⊚ |
| **Test Example 23** | Example 23 | 15 | 5 | ⊚ | ⊚ | ⊚ | ⊚ |
| **Test Example 24** | Example 24 | 15 | 5 | ⊚ | ⊚ | ⊚ | ⊚ |
| **Test Example 25** | Example 25 | 15 | 5 | ⊚ | ⊚ | ⊚ | ⊚ |
| **Test Example 26** | Example 26 | 15 | 5 | ⊚ | ⊚ | ⊚ | ⊚ |
| **Test Example 27** | Example 27 | 15 | 5 | ⊚ | ⊚ | ⊚ | ⊚ |
| **Test Example 28** | Comparativ e Example 1 | 15 | 5 | ⊚ | Δ | X | X |
| **Test Example 29** | Comparativ e Example 2 | 15 | 5 | Δ | ⊚ | X | X |
| **Test Example 30** | Comparativ e Example 3 | 15 | 5 | ⊚ | Δ | X | X |
| **Test Example 31** | Comparativ e Example 4 | 15 | 5 | Δ | ⊚ | Δ | Δ |
| **Test Example 32** | Comparativ e Example 5 | 15 | 5 | Δ | ⊚ | Δ | Δ |
| **Test Example 33** | Comparativ e Example 6 | 15 | 5 | ⊚ | ⊚ | Δ | Δ |
| **Test Example 34** | Comparativ e Example 7 | 15 | 5 | ⊚ | ⊚ | Δ | Δ |
| **Test Example 35** | Comparativ e Example 8 | 15 | 5 | Δ | ○ | Δ | Δ |
| **Test Example 36** | Comparative Example 9 | 15 | 5 | ○ | Δ | Δ | Δ |

The surface characteristics and the evaluations thereof in [Table 2] and [Table 3] above were performed using the following methods.

### <Coating thickness>

A coating thickness was measured using a nondestructive portable coating thickness gauge.

### <External design>

A color of a coating was evaluated as a color difference value as compared to a standard beige color specimen, and was expressed as follows.

[Evaluation criteria] ⊚: ΔE < 1.0 (very good), ∘: 1.0 ≤ ΔE < 1.5 (good), Δ: 1.5 ≤ ΔE < 2.5 (poor), X: 2.5 < ΔE (very poor)

### <Glossiness>

Glossiness was evaluated by measuring a 60° specular reflection value using SHEEN equipment.

### <Pencil Hardness>

After drawing a 10cm line at a 45° angle with a load of 1000±10g using a Mitsubishi pencil (HB~4H), pencil hardness was evaluated by the presence or absence of scratches.

### <Corrosion resistance>

Corrosion resistance was evaluated using a Cyclic Corrosion Test (CCT). Salt spray (5% concentration, 1kg/cm² spray pressure at 35°C) was performed for 5 hours under conditions of 95% relative humidity, dried for 2 hours at 30% relative humidity and a temperature of 70°C, and then repeatedly treated for 3 hours at 95% relative humidity and a temperature of 50°C as one cycle, repeated 100 times, and then evaluated by an area of white rust, occurred on the surface of the steel sheet.

[Evaluation Criteria] ⊚: Corrosion area 0%, ∘: Corrosion area 5% or less, △: Corrosion area 5-30%, X: Corrosion area 30% or more

### <Bending Processability Evaluation>

For an antiviral composite resin coated steel sheet, a surface of the steel sheet was put in a vice and bent by 180° with a pressure of 1 kgf, then tightened until the steel sheet becomes flat (0T-bending). After attaching Scotch tape to a bent coating and peeling the coating, the occurrence of cracks on the peeled surface of the tape and the presence or absence of peeling of coating were evaluated.

[Evaluation criteria] ⊚: No cracks or peeling, ∘: Visible microcracks, but no peeling of coating, △: Severe cracking, no peeling of coating, X: Peeling of coating along with cracks

### <Chemical resistance>

It was determined by the number of times until the coating is peeled when a gauze soaked in methyl ethyl ketone (MEK) with a load of 1 kg was rubbed back and forth with a force of 1 kgf.

[Evaluation criteria] ⊚: 100 times or more, ∘: 70 times or more but less than 100 times, △: 40 times or more but less than 70 times, X: less than 40 times

### <Antiviral properties>

### <Short-term antiviral properties evaluation>

Antiviral properties of composite resin coated steel sheets of Examples and Comparative Examples were evaluated according to the ISO 21702 standard at the Jeonbuk National University Infectious Disease Research Institute. 400 µL of COVID-19 (3.2X10⁶ TCID50/ml) virus stock solution cultured in monkey cells (Vero E6) was dropped onto each of a control group and composite resin-coated steel sheet specimens (50X50 mm), covered with a polymer film (40x40 mm, Polyethylene film), and then in contact for 2 hours at room temperature, and then recovered with 1.9 mL of culture medium. Serial dilutions were made until the culture medium reached 10⁻¹ to 10⁻⁵. Each smear was infected with monkey host cells (Vero E6 Cell) and cultured at 37°C for 72 hours. A MTT dye (Triazolium) was dropped into each cultured well and a change in color was observed to determine the survival of the host cells. A concentration value of living cells in the well (TCID50) was calculated and a virus inactivation rate was quantitatively evaluated by comparing the same with the control group.

### <Long-term antiviral properties evaluation>

The composite resin coated steel sheet was irradiated for 1000 hours under QUV-B evaluation conditions, and then the antiviral properties were evaluated using the same method as the short-term antiviral evaluation.

[Evaluation criteria] Virus inactivation rate (X) (⊚): 95% ≤ X, (∘): 90 ≤ X < 95%, (Δ: 80 ≤ X < 90%, (X): X < 80%

In the antiviral composite resin coated steel sheet of the present disclosure, the antiviral composite resin composition has an appealing appearance color itself when coated with a dry film thickness of 15 µm, and thus has excellent external design. However, it was found that when a primer layer is included in a lower portion of the composite resin top coating layer, an even more appealing color is exhibited. Such an effect is determined to be the result of the increase in the hiding effect of the base steel sheet as the thickness of the primer coating, which is a bottom coating, increases, and the increase in the vividness of the color by the pigment as the diffuse reflection of light decreases.

In the antiviral composite resin coated steel sheet of the present disclosure, the antiviral composite resin composition was effective even when (a) metal hydroxide or (b) hydroxyapatite is used alone, but when added together with (c) a metal-doped thermosensitive titanium dioxide photocatalyst, the virus inactivation rate significantly increased. These results are determined that the inactivation of virus was promoted by the action of active oxygen generated by the action of (c) metal-doped thermosensitive titanium dioxide photocatalyst together with cations and anions generated by (a) metal hydroxide or (b) hydroxyapatite. In addition, the long-term durability evaluation of the antiviral composite resin coated steel sheet also showed excellent results without any decrease in antiviral properties.

While example embodiments have been shown and described above, it will be apparent to those skilled in the art that modifications and variations could be made without departing from the scope of the present disclosure as defined by the appended claims.

## Claims

1. An antiviral composite resin composition comprising:
30 to 60 wt% of a urethane-modified polyester binder resin;
3 to 15 wt% of a curing agent;
0.1 to 10 wt% of a pigment;
0.1 to 10 wt% of an antiviral compound; and
a remainder of a solvent,
wherein the antiviral component comprises one or more selected from the group consisting of
(A) metal hydroxide ([M₁OH₂]),
(B) hydroxyapatite ([Ca₁₀(PO₄)₆(OH)₂)), and
(C) metal-doped thermosensitive titanium dioxide photocatalyst ([M₂-TiO₂]),
wherein M₁ is Ca or Mg, and
M₂ is Pt, Cr, V, Mn, Fe, Zn, Cu, Ni, Zr, Mo, Ag, W, or Au.

2. The antiviral composite resin composition of claim 1, wherein the urethane-modified polyester binder resin has a weight average molecular weight (MW) of 2000 to 30000.

3. The antiviral composite resin composition of claim 1, wherein the urethane-modified polyester binder resin has a hydroxy value of 10 to 300.

4. The antiviral composite resin composition of claim 1, wherein the urethane-modified polyester binder resin has an acid value of 5 to 30 mgKOH/g.

5. The antiviral composite resin composition of claim 1, wherein the curing agent is at least one selected from the group consisting of an aziridine curing agent, a melamine curing agent, and an isocyanate curing agent.

6. The antiviral composite resin composition of claim 5, wherein the isocyanate curing agent is at least one selected from the group consisting of compounds represented by the following structural formula (d) and the following structural formula (e),
**R** - **N=C=O** (d)
in the structural formula (d), R is a methyl group, an ethyl group, a propyl group, a phenyl group, a 2-isopropylphenyl group, or a cyclohexyl group,
**O=C=N - R' - N=C=O** (e)
in the structural formula (e), R' is 1,3-phenylene, 1,4-phenylene, tolylene-2,4, tolylene-2,6, m-xylylene, dicyclohexylmethane 4,4', methylenediphenyl 4,4', or hexamethylene.

7. The antiviral composite resin composition of claim 1, wherein the pigment comprises at least one selected from the group consisting of iron oxide (Fe₂O₃), titanium dioxide (TiO₂), carbon black, carbon nanotubes, graphite and graphene.

8. The antiviral composite resin composition of claim 1, wherein the pigment has an average particle size of 5 to 30 µm.

9. The antiviral composite resin composition of claim 1, further comprising:
at least one rust-preventive pigment selected from the group consisting of colloidal silica, silica sol and alkali metal silicate.

10. The antiviral composite resin composition of claim 1, wherein the antiviral compound is a combination of one of the (A) metal hydroxide and (B) hydroxyapatite and (C) the metal-doped thermosensitive titanium dioxide photocatalyst.

11. The antiviral composite resin composition of claim 10, wherein the antiviral compound has a weight ratio of one of the (A) metal hydroxide and (B) hydroxyapatite and (C) the metal-doped thermosensitive titanium dioxide photocatalyst of 3:1 to 1:3.

12. The antiviral composite resin composition of claim 1, wherein the antiviral compound comprises all of the (A) metal hydroxide, (B) hydroxyapatite, and (C) metal-doped thermosensitive titanium dioxide photocatalyst.

13. The antiviral composite resin composition of claim 12, wherein the (A) metal hydroxide, (B) hydroxyapatite, and (C) metal-doped thermosensitive titanium dioxide photocatalyst have a weight ratio of 1:1:1.

14. The antiviral composite resin composition of claim 1, wherein the remainder of the solvent is at least one selected from the group consisting of toluene, xylene, isopropanol, solvent naphtha, cellosolve, cellosolve acetate and butyl cellosolve.

15. An antiviral composite resin coated steel sheet, comprising:
a base steel sheet; and
an antiviral composite resin coating comprising the antiviral composite resin composition according to any one of claims 1 to 14 on at least one surface of the base steel sheet.

16. The antiviral composite resin coated steel sheet of claim 15, wherein the base steel sheet is a hot-dip galvanized steel sheet (GI), a hot-dip galvannealed steel sheet (GA), an electrogalvanized steel sheet (EG), an aluminum-plated steel sheet, or a zinc-aluminum-magnesium ternary alloy-plated steel sheet.

17. The antiviral composition resin coated steel sheet of claim 15, wherein the antiviral composite resin coating has a dry coating thickness of 3 to 40 µm.

18. The antiviral composition resin coated steel sheet of claim 15, further comprising:
a primer coating between the base steel sheet and the antiviral composite resin coating,
wherein the primer coating is prepared using a composition including 40 to 60 wt% of a polyethylene polymer resin, 5 to 15 wt% of a melamine curing agent, 1 to 8 wt% of colloidal silica, 1 to 8 wt% of a pigment, and a remainder of a solvent.

19. The antivirus composition resin coated steel sheet of claim 18, wherein the primer coating has a dry coating thickness of 2 to 7 µm.
